# EUROPEAN PATENT SPECIFICATION

(11) **EP 1 682 281 B1**
(45) Date of publication and mention of the grant of the patent: **24.08.2016**
(21) Application number: 03789031.6
(22) Date of filing: 12.11.2003
(51) Int. Cl.: B05B 13/02, C03C 17/28, C03C 17/00, C03C 17/32, B05D 1/28, B05D 1/30, B05C 19/00

(54) **METHOD AND APPARATUS FOR COATING RETURNABLE GLASS CONTAINERS**
VERFAHREN UND APPARAT ZUR BESCHICHTUNG WIEDERVERWENDBARER GLASBEHÄLTER
PROCEDE ET DISPOSITIF DESTINE AU REVETEMENT DES CONTENANTS DE VERRE CONSIGNES

(43) Date of publication of application: 26.07.2006
(73) Proprietor: Arkema France, 92700 Colombes (FR)
(72) Inventor: SCHULTHESS, Holger, 09244 Lichtenau (DE); KIMMER, Dirk, 09669 Frankenberg (DE)
(86) International application number: PCT/EP2003/012628
(87) International publication number: WO 2005/049219

(56) References cited:
- WO-A-95/17263
- DE-A- 3 705 592
- GB-A- 1 424 460
- GB-A- 1 446 155
- US-A- 3 934 993
- US-A- 4 002 143
- US-A- 4 201 562
- US-A- 4 220 118
- US-A- 4 603 067
- US-B1- 6 363 749

## Description

The present invention relates to a method for applying a protective coating liquid to returnable glass containers in the filling plant before re-introducing the glass containers in to the retail circulation according to the generic part of claim 1 and to an apparatus for applying a protective liquid coating to returnable glass containers in the filling plant before re-introducing the glass containers in to the retail circulation according to the generic part of claim 5.

Returnable glass containers, in particular bottles like beer bottles or bottles for mineral water are recirculated between filling line, retailer and costumer. During recirculation those glass containers are subject to wear and tear. In particular glass containers get wear flaws on their outside, deteriorating the visual appearance. Those effects result from the handling of the glass containers, in particular transportation of the glass containers in corresponding racks, boxes etc.

In order to improve the visual appearance of glass containers, a protective coating is applied to the glass containers in the filling plant before re-introducing the glass container into the retail circulation. The protective coating is intended to penetrate and fill pre-existing wear flaws on the glass containers. Normally, the protective coating is completely removed during the next cleaning of the glass containers at the filling line before the next filling takes place.

The advantages of a protective coating applied to glass containers are an increase in the number of recirculation cycles the glass containers achieve, a reduction in superficial wear of the glass containers, an improved handling of the glass containers on conveyor lines, a reduction in noise level and, in particular, a long standing improved visual appearance of the glass containers. Altogether, a substantial cost-reduction is the result of applying a protective coating to glass containers as explained.

The best results in applying the protective coating are achieved when the protective coating is applied to the product immediately after the glass container exits the bottle washing machine. However, in some applications a protective coating is applied even after container inspection or label application.

In the prior art forming the starting point of the invention (US-A-4,603,067) the protective coating is a liquid, namely water-based emulsions, which is applied to the glass container in the filling plant before re-introducing the glass containers in to the retail circulation by means of a sponge from a supply of coating liquid in a bucket or the like. When a ready-to-apply stock solution is used which was stored quite a long time before use, segregation of such mixture occurs and the quality of the coating is reduced. Moreover, contamination of the coating liquid is a problem which is highly relevant in this kind of food processing business.

Apart from the above, above explained method suffers from the fact that the glass containers have to be removed from the conveyor line to be coated with the coating liquid in a separate step.

For use in coating glassware such as bottles during the production thereof a spray hood was proposed equipped to spray side wall portions of bottles using a gas-borne tin tetrachloride vapour (US-A-4,220,118). It is said that this spray hood would be applicable to the application of sprayed materials on glassware generally. In this spray hood containers are transported by means of conveyer line, and a coating liquid is fed to a spray means positioned at a coating station of the conveyor line. The coating liquid is applied onto the outside of the glass containers on the conveyor line by means of spray means.

Above mentioned apparatus is not adapted to be used for applying water-based emulsion which is the preferred coating liquid to be used in the relevant method which applies a protective coating liquid to returnable glass containers in the filling plant before re-introducing the glass containers in to the retail circulation.

The document US 6,363,749 discloses a process in a production plant for manufacturing surface sealed hollow glass containers and especially the cold end coating composition and its application on freshly produced hollow glass containers.

The document US 3,934,993 discloses glassware handling and treating equipment especially a cold end coating method in the production process of glass containers.

The document US 4,002,143 discloses a hot and glass container coating system. The system applies a protective coating during the production of new glass containers.

The object of the present invention is to provide an improved method for applying a protective coating to returnable glass containers, in particular glass bottles, in the filling plant before re-introducing the glass containers in to the retail circulation. Further, a corresponding apparatus shall be proposed.

The above mentioned object of the invention is met with a method according to claim 1 and an apparatus according to claim 5.

Preferred embodiments of the method are subject of claims 2 to 4, preferred embodiments of the apparatus are subject of claims 6 to 10.

The important aspect of the invention is to apply a convenient coating liquid to the outside of the glass containers by means of spray means integrated into the usual handling of the glass containers on a conveyor line in the filling plant before re-introducing the glass containers in to the retail circulation.

Details and advantageous of preferred embodiments of the invention are explained together with explanation of a preferred embodiment of the invention with reference to the accompanying drawings. In the drawings:
- Fig. 1: shows a schematic representation of a method and apparatus according to a preferred embodiment of the invention,
- Fig. 2: shows a static mixing means advantageously employed within the teaching of the invention.

Disclosed here is a method for applying a protective coating liquid to returnable glass containers in the filling plant before re-introducing the glass containers in to the retail circulation, the method comprising the steps of transporting the glass containers by means of a conveyor line, providing a supply of coating liquid, feeding the coating liquid to a spray means positioned at a coating station of the conveyor line, applying the coating liquid onto the outside of the glass containers on the conveyer line by means of the spray means. The essential aspect of the invention is to apply the coating liquid by means of the spray means directly onto the glass containers passing the coating station on the conveyor line. No interruption of the handling process for the glass containers is necessary, at least the glass containers can stay on the conveyor line whilst being sprayed with the protective coating liquid.

It is possible to perform a stepwise method in that the movement of the glass containers is interrupted while the coating liquid is applied.

However, it is preferred that the glass containers are continuously moved through the coating station while the coating liquid is applied. A number of evenly or un-unevenly distributed spray nozzles is used as a spray means. This allows for a perfect and even distribution of the protective coating to the outside of the glass containers.

An even improved application of a protective coating is achieved if the spray means is moved relative to the glass container while the coating liquid is applied to the outside of the glass container. Preferably, the spray means is operated continuously. This means that the glass containers are continuously transported by means of the conveyor line through the coating station where the spray means is operated continuously to shower the outside of the glass containers with protective coating liquid.

However, there is an alternative approach where the spray means is operated discontinuously and sprays coating liquid only stepwise or upon recognition that a glass container is present in the coating station. This alternative method saves a substantial amount of coating liquid, because the coating liquid is applied only to a glass container that is indeed present in the coating station.

The invention uses an emulsion as coating liquid, which is an oil in water emulsion, being especially stable in use and highly resistant to wear and tear. In spite of those advantages an oil in water emulsion can be removed from the outside of the glass containers later quite easily by applying high temperature cleaning water within a cleaning process.

Such oil in water emulsion is a stable dispersion of oil in water normally not easily to be separated. To realize such emulsion a liquid coating agent is used. Water is used as the diluting liquid.

The material for realizing the coating agent of the coating liquid is a liquid wax. For example and preferably such a liquid wax may be provided by a liquid paraffin. In order to enhance emulsification, there is at least one emulsifying agent used together with a liquid wax in order to allow the liquid wax, in particular the liquid paraffin, to end up as an oil in water emulsion. Testing of emulsification will lead the technician of average skills to a selection of the best possible emulsifying agents.

According to the invention the method is realized in that the supply of coating liquid is provided from two different sources from where a coating agent on the one hand and a diluting liquid on the other hand are fed to a common feed line. As explained above, the coating agent is a liquid wax, preferably a liquid paraffin, whereas the diluting liquid is just tap water. The coating agent and the diluting liquid are thoroughly mixed by a mixing means positioned at the beginning or within the common feed line.

In a preferred embodiment of the method, mixing is done with a mixing means having no moving parts. Such mixing means may be a mixing chamber, e.g. a swirl chamber or the like, known from other applications like oil/gasoline mixing at petrol stations. However, tests have resulted in the recommendation that a lengthwise extending mixing means with mixing vanes and/or mixing baffles within the liquid flow be used such that the mixture of coating agent and diluting liquid is continuously transformed into a stable emulsion while flowing through this mixing means.

Tests have proven that an emulsion being mixed by a static mixing means as explained above remains stable for days, not hours, and always much longer than the necessary application period for this emulsion. The period of time necessary to apply the emulsion to the outside of the returnable glass containers is minutes, stability of the emulsion, however, mixed in the static mixing means explained above lasts hours to days.

The in-line mixing of the coating liquid reduces the risk of contamination. Handling of containers is not necessary, this saves time and costs. Coating liquid can be supplied continuously.

As already explained above the usual type of returnable glass container to which the inventive method is applied is a glass bottle like a beer bottle. And usually the coating liquid used is a liquid that is stable on the outside of the glass container protecting the outside and reducing superficial wear during use and handling of the glass container, but being removable by means of the normal cleaning cycle before re-filling takes place.

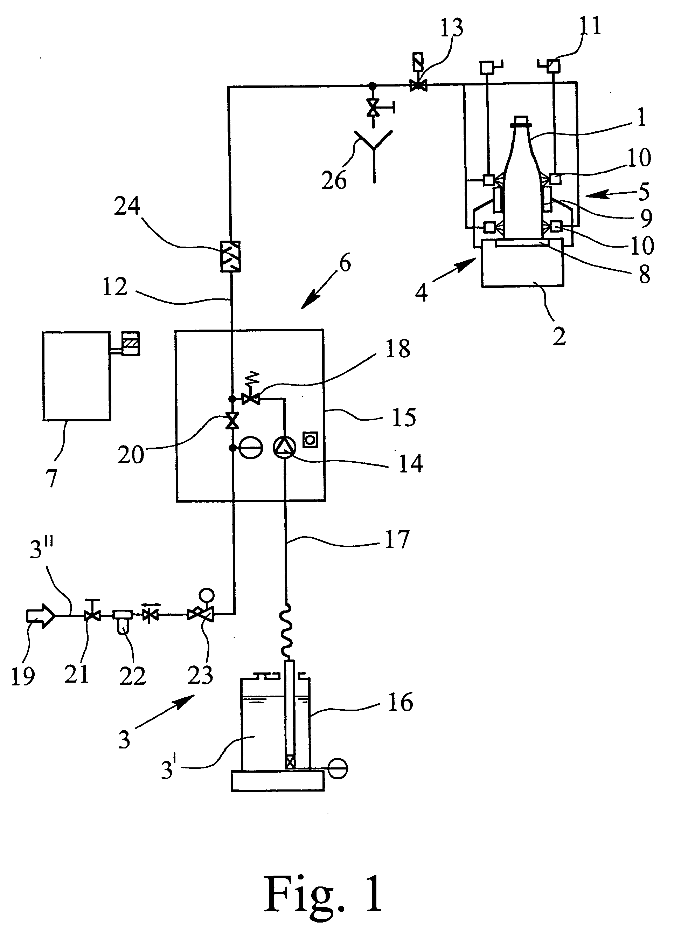

Now, the figures show a very preferred embodiment of an apparatus for applying a protective coating to returnable glass containers 1 in the filling plant before re-introducing the glass containers in to the retail circulation. This apparatus comprises a conveyor line 2 for transportation of the glass containers 1, a supply of coating liquid 3, a coating station 4 at the conveyor line 2, a spray means 5 positioned at the coating station 4, a liquid feeding means 6 feeding the coating liquid to the spray means 5, and a control means 7 controlling the operation of the apparatus. The spray means 5 is operable to apply a coating liquid onto the outside of the glass containers 1 on the conveyor line 2 without removing the glass containers 1 from the conveyor line 2 and preferably automatically. Fig. 1 shows that in particular here the conveyor line 2 is provided with a conveyor belt 8 transporting the glass containers 1. The glass containers 1 shown here as glass bottles are further guided by side rollers 9 of the conveyor line 2.

There is a first way of operation of the conveyor line 2 in that the movement of the glass containers 1 is interrupted while the coating liquid is applied. However, in a preferred and here disclosed embodiment it is provided that the glass containers 1 are continuously moved through the coating station 4 while the coating liquid is applied.

As can be obtained from Fig. 1, here the spray means 5 comprises a number of evenly or unevenly distributed spray nozzles 10 to distribute the coating liquid on the outside of the glass container 1. In the preferred embodiment, the lower spray nozzles 10 are fixed whereas the upper spray nozzles 10 are angularly adjustable relative to the glass container 1 as indicated by adjustment means 11. Indicated are those adjustment means 11 as manually operable adjustment means. However, a motorized and computerized system may be equally applied. The advantages of adjustable spray nozzles 10 is that they can be adapted to different container sizes.

There may be a further improvement regarding a most even distribution of coating liquid on the outside of the glass container 1. In order to achieve this it may be provided that the spray nozzles 10 are moveable relative to the glass container 1 while the coating liquid is applied to the glass container 1.

As already explained above, according to a preferred embodiments, the spray means 5 is operated continuously. However, there is a different way of operating the apparatus in that the spray means 5 is operated discontinuously and sprays coating liquid only stepwise or upon recognition that a glass container 1 is present in the coating station 4. In this embodiment a recognition means at the coating station 4 should be provided in order to recognize the presence of a glass container 1 in the coating station 4 to start the supply of coating liquid 3 by means of the spray nozzles 10.

Now, the liquid feeding means 6 shall be described in more detail. According to the disclosed and preferred embodiment the liquid feeding means 6 comprises at least one feed line 12 for feeding the coating liquid to the spray means 5 and at least one valve means 13 within the feed line 12. As indicated, the valve means 13 is a solenoid valve means centrally controlled by the control means 7. Further, in this embodiment the feeding means 6 comprises at least one pump means 14 for pressurizing the feed line 12. This pump means 14 here is a part of a central dosing unit 15. This will be explained in detail later.

In the present embodiment the apparatus is characterized in that the supply of coating liquid 3 comprises two sources 3', 3", on the one hand a source 3' being a supply of coating agent, on the other hand a source 3" being a supply of diluting liquid, wherein both sources 3', 3" are connected to the common feed line 12 for the coating liquid. In the present embodiment, the source 3' for the coating agent comprises a tank 16 for the coating agent, the pump means 14 and a dosing valve 18 at the downstream side of the pump means 14, wherein the downstream side of the pump means 14, i.e. the downstream side of the dosing valve 18, is connected to the common feed line 12.

The pump means 14 is the dosing pump for the source 3' for coating agent and includes a stroke adjustment as a volume adjustment. For example volume flow may be 2,5 1/h for a usual application.

The source 3" for diluting liquid comprises a water tap 19 and a flow valve 20, the downstream side of the flow valve 20 being connected to the common feed line 12. This is the simplest way to provide a diluting liquid. It can be seen that the water tap 19 has a usual main valve 21 as a shut off-valve, a filter assembly 22, a flow meter 23, and is then connected to the common feed line 12.

Using an emulsion as coating liquid it is particularly important to achieve an effective mixing of the components of the coating liquid. As explained above, the coating liquid is an oil in water emulsion with a liquid wax, preferably a liquid paraffin, being the coating agent and water being the diluting liquid.

In the present and preferred embodiment the mixing is done by a mixing means 24 without moving parts. This is a static mixer which basically is known from prior art (see the different types of static mixers on website www.fluitec.ch).

A static mixer is provided here as a lengthwise extending mixing means 24 with mixing vanes 25.

A substantial advantage of a static mixer is that the resulting emulsion is stable for a long time (distance) and this static mixer is provided to be installed for an in-line application with no separate parts and no moving parts. It has been recognized by extensive testing that the result of such static mixer is extremely positive with an emulsion for a liquid wax as preferably applied here.

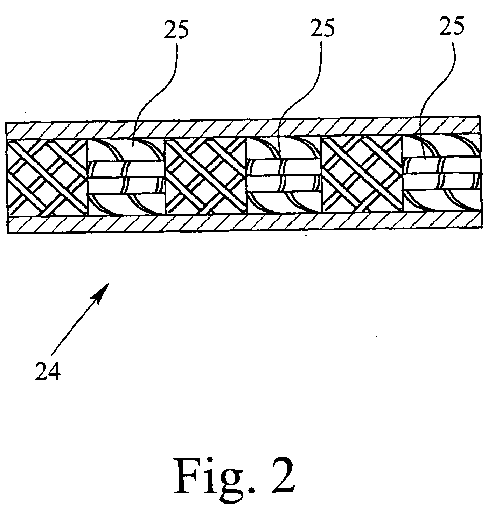

Whereas Fig. 1 shows the mixing means 24 in general within the common feed line 12, Fig. 2 shows a preferred embodiment of a mixing means 24. It can be seen that the mixing means 24 is lengthwise extending for e.g. 100 to 400 mm with a diameter of approximately 8 mm to approximately 20 mm with a number of different sections. In particular there are sections with mixing vanes 25 and other sections with mixing baffles or sections with interstitial mixing means successively passed by the coating liquid. The specific design of such static mixer 24 and the succession of different types of mixing vanes 25 etc. is the result of testing for the specific application.

Finally, a sampling point 26 is incorporated into the system to monitor the concentration of the emulsion. The sampling point 26 allows monitoring of the concentration of the coating liquid before entering of the spray means 5.

In operation of the embodiment disclosed in Fig. 1 the process is started by operation of the control means 7. Solenoid valve of valve means 13 is opened and enables water feeding from water tap 19 provided that the main valve 21 is open. Following a prior calculation, the stroke length of the pump means 14 is adjusted, preferably automatically by the control means 7, to the intended concen- tration of coating agent in the coating liquid. Pump means 14 is started and draws off the coating agent from the tank 16 and feeds it through the valve means 13 into the water flow and through the common feed line 12 towards the spray means 5. Pump means 14 is designed as a metering pump adjustable to the exact volume of coating agent to be metered into the specifically defined flow of water. Pressure in the system may be around a couple of bar, preferably about 4 bar.

The coating liquid then continues to flow towards the spray means 5 and is sprayed via the spray nozzles 10 onto the outside of the glass containers 1. In the present embodiment, the glass containers pass in vertical orientation on the conveyor line 12. However, they can pass through the coating station 4 even vertically hanging from a conveyor line. Further, different orientations are possible as well.

Finally, as explained above, the coating liquid for coating returnable glass containers is an oil in water emulsion from a liquid wax, preferably a liquid paraffin, with at least one emulsifying agent in water.

## Claims

1. Method for applying a protective coating liquid to returnable glass containers, in particular glass bottles for beer, that are integrated into the filling process of the glass containers, the method comprising the steps of:
transporting the glass containers by means of a conveyor line,
providing a supply of liquid coating agent on the one hand and an diluting liquid on the other hand ,
feeding the liquid coating agent on the one hand and an diluting liquid on the other hand to a common feed line,
thoroughly mixing the coating agent and the diluting liquid by mixing means positioned at the beginning or within the common feed line to provide the protective coating liquid as an emulsion,
feeding the coating liquid to a spray means positioned at a coating station of the conveyor line,
applying the coating liquid onto the outside of the glass containers on the conveyer line by means of the spray means.
wherein the coating liquid is applied to the glass containers without removing the glass containers from the conveyer line and wherein the coating liquid is an oil in water emulsion and wherein a liquid wax, preferably a liquid paraffin, with at least one emulsifying agent is used as liquid coating agent and water is used as a diluting liquid.

2. Method according to claim 1, **characterized in that** a mixing means without moving parts is used.

3. Method according to claim 2, **characterized in that** a lengthwise extending mixing means with mixing vanes and/or mixing baffles within the liquid flow is used such that the mixture of coating agent and diluting liquid is continuously transformed into a stable emulsion while flowing through this mixing means.

4. Method according to any of the preceding claims, **characterized in that** the coating liquid is-mixed with water from a tap or another water supply.

5. Apparatus for applying a protective coating liquid to returnable glass containers (1), in particular glass bottles for beer , that is integrated into the filling process of the glass containers, the apparatus comprising:
a conveyor line (2) for transportation of the glass containers (1),
a supply of coating liquid (3), comprising two sources (3', 3"), namely on the one hand a source (3') being a supply of coating agent and on the other hand a source (3") being a supply of diluting liquid
a coating station (4) at the conveyor line (2),
a spray means (5) positioned at the coating station (4),
a liquid feeding means (6) feeding the protective coating liquid to the spray means (5),
a control means (7) controlling the operation of the apparatus,
wherein the spray means (5) is operable to apply the protective coating liquid onto the outside of the glass containers (1) on the conveyor line (2) without removing the glass containers (1) from the conveyor line (2) and preferably automatically,
wherein the liquid feeding means (6) comprises, at least one feed line (12) for feeding the coating liquid, at least one valve means (13) within the feed line (12) and a mixing means (24) positioned at the entrance of or within the common feed line (12),
wherein both sources (3', 3") are connected to a common feed line (12) for the coating liquid.

6. Apparatus according to claim 5, **characterized in that**, the source (3') for the coating agent comprises a tank (16) for the coating agent, a pump means (14) and, preferably, a dosing valve (18) at the downstream side of the pump means (14), wherein the downstream side of the pump means (14), preferably the downstream side of the dosing valve (18), is connected to the common feed line (12).

7. Apparatus according to claim 5 or 6, **characterized in that** the source (3") for diluting liquid comprises a water tap (19) and a flow valve (20), the downstream side of the flow valve (20) being connected to the common feed line (12).

8. Apparatus according to any one of the claims 5 to 7, **characterized in that** the mixing means (24) is a mixing means without moving parts, i. e. a static mixing means.

9. Apparatus according to claim 8 , **characterized in that** the mixing means (24) is a lengthwise extending mixing means with mixing vanes (25) and/or mixing baffles within the liquid flow, wherein the mixture of coating agent and diluting liquid is continuously transformed into a stable emulsion while flowing through the mixing means (24) in the lengthwise direction.

10. Apparatus according to claim 9 , **characterized in that** the mixing means (24) comprises a number of mixing chambers with different numbers and/or arrangements of mixing vanes (25) and/or mixing baffles arranged one after the other in the lengthwise direction of the mixing means.

## Patentansprüche

1. Verfahren zum Aufbringen einer schützenden Beschichtungsflüssigkeit auf wiederverwendbare Glasbehälter, insbesondere Glasflaschen für Bier, die im Füllprozess der Glasbehälter integriert sind, wobei das Verfahren die folgenden Schritte umfasst:
Transportieren der Glasbehälter mit Hilfe einer Förderlinie,
Bereitstellen einer Zufuhr von flüssigem Beschichtungsmittel einerseits und einer Verdünnungsflüssigkeit andererseits,
Zuführen des flüssigen Beschichtungsmittels einerseits und einer Verdünnungsflüssigkeit andererseits zu einer gemeinsamen Zuleitung,
gründliches Vermischen des Beschichtungsmittels und der Verdünnungsflüssigkeit mit einem Mischmittel, das am Anfang oder innerhalb der gemeinsamen Zuleitung angeordnet ist, um die schützende Beschichtungsflüssigkeit als Emulsion bereitzustellen,
Zuführen der Beschichtungsflüssigkeit zu einem Sprühmittel, das an einer Beschichtungsstation der Förderlinie angeordnet ist,
Aufbringen der Beschichtungsflüssigkeit auf die Außenseite der Glasbehälter auf der Förderlinie mit Hilfe des Sprühmittels,
wobei die Beschichtungsflüssigkeit auf die Glasbehälter aufgebracht wird, ohne die Glasbehälter von der Förderlinie zu entfernen, und wobei die Beschichtungsflüssigkeit eine Öl-in-Wasser-Emulsion ist, und wobei ein flüssiges Wachs, vorzugsweise ein flüssiges Paraffin, mit wenigstens einem Emulgiermittel als flüssiges Beschichtungsmittel verwendet wird und Wasser als Verdünnungsflüssigkeit verwendet wird.

2. Verfahren nach Anspruch 1, **dadurch gekennzeichnet, dass** ein Mischmittel ohne bewegliche Teile verwendet wird.

3. Verfahren nach Anspruch 2, **dadurch gekennzeichnet, dass** ein längs verlaufendes Mischmittel mit Mischflügeln und/oder Mischleitblechen innerhalb der Flüssigkeitsströmung verwendet wird, so dass das Gemisch aus Beschichtungsmittel und Verdünnungsflüssigkeit kontinuierlich in eine stabile Emulsion verwandelt wird, während es durch dieses Mischmittel fließt.

4. Verfahren nach einem der vorhergehenden Ansprüche, **dadurch gekennzeichnet, dass** die Beschichtungsflüssigkeit mit Wasser aus einem Wasserhahn oder einer anderen Wasserzufuhr gemischt wird.

5. Apparat zum Aufbringen einer schützenden Beschichtungsflüssigkeit auf wiederverwendbare Glasbehälter (1), insbesondere Glasflaschen für Bier,
der im Füllprozess der Glasbehälter integriert ist, wobei der Apparat das Folgende umfasst:
eine Förderlinie (2) für den Transport der Glasbehälter (1),
eine Zufuhr von Beschichtungsflüssigkeit (3), umfassend zwei Quellen (3', 3"), nämlich einerseits eine Quelle (3`), die eine Zufuhr von Beschichtungsmittel ist, und andererseits eine Quelle (3"), die eine Zufuhr von Verdünnungsflüssigkeit ist,
eine Beschichtungsstation (4) an der Förderlinie (2),
ein Sprühmittel (5), das an der Beschichtungsstation (4) angeordnet ist,
ein Flüssigkeitszuführungsmittel (6), das die schützende Beschichtungsflüssigkeit dem Sprühmittel (5) zuführt,
ein Steuermittel (7), das den Betrieb des Apparats steuert,
wobei das Sprühmittel (5) dahingehend betätigt wird, dass es die schützende Beschichtungsflüssigkeit auf die Außenseite der Glasbehälter (1) auf der Förderlinie (2) aufbringt, ohne die Glasbehälter (1) von der Förderlinie (2) zu entfernen, und vorzugsweise automatisch,
wobei das Flüssigkeitszuführungsmittel (6) wenigstens eine Zuleitung (12) zum Zuführen der Beschichtungsflüssigkeit, wenigstens ein Ventilmittel (13) in der Zuleitung (12) und ein Mischmittel (24), das am Eingang oder innerhalb der gemeinsamen Zuleitung (12) angeordnet ist, umfasst,
wobei beide Quellen (3`, 3") mit einer gemeinsamen Zuleitung (12) für die Beschichtungsflüssigkeit verbunden sind.

6. Apparat nach Anspruch 5, **dadurch gekennzeichnet, dass** die Quelle (3`) für das Beschichtungsmittel einen Behälter (16) für das Beschichtungsmittel, ein Pumpenmittel (14) und vorzugsweise ein Dosierventil (18) auf der stromabwärts gelegenen Seite des Pumpenmittels (14) umfasst, wobei die stromabwärts gelegene Seite des Pumpenmittels (14), vorzugsweise die stromabwärts gelegene Seite des Dosierventils (18), mit der gemeinsamen Zuleitung (12) verbunden ist.

7. Apparat nach Anspruch 5 oder 6, **dadurch gekennzeichnet, dass** die Quelle (3") für Verdünnungsflüssigkeit einen Wasserhahn (19) und ein Strömungsventil (20) umfasst, wobei die stromabwärts gelegene Seite des Strömungsventils (20) mit der gemeinsamen Zuleitung (12) verbunden ist.

8. Apparat nach einem der Ansprüche 5 bis 7, **dadurch gekennzeichnet, dass** das Mischmittel (24) ein Mischmittel ohne bewegliche Teile, d.h. ein statisches Mischmittel ist.

9. Apparat nach Anspruch 8, **dadurch gekennzeichnet, dass** das Mischmittel (24) ein längs verlaufendes Mischmittel mit Mischflügeln (25) und/oder Mischleitblechen in der Flüssigkeitsströmung ist, wobei das Gemisch aus Beschichtungsmittel und Verdünnungsflüssigkeit kontinuierlich in eine stabile Emulsion verwandelt wird, während es in Längsrichtung durch das Mischmittel (24) fließt.

10. Apparat nach Anspruch 9, **dadurch gekennzeichnet, dass** das Mischmittel (24) eine Reihe von Mischkammern mit unterschiedlichen Anzahlen und/oder Anordnungen von Mischflügeln (25) und/oder Mischleitblechen umfasst, die hintereinander in der Längsrichtung des Mischmittels angeordnet sind.

## Revendications

1. Procédé pour l'application d'un liquide de revêtement protecteur sur des récipients en verre consignés, en particulier des bouteilles de bière en verre, qui sont intégrés dans le processus de remplissage des récipients en verre, le procédé comprenant les étapes suivantes :
transporter les récipients en verre au moyen d'une chaîne de transport,
prévoir un moyen d'approvisionnement en agent de revêtement liquide d'une part et un liquide de dilution d'autre part,
introduire l'agent de revêtement liquide d'une part et un liquide de dilution d'autre part dans une conduite d'alimentation commune,
mélanger pleinement l'agent de revêtement et le liquide de dilution par le biais d'un moyen de mélange positionné au début ou à l'intérieur de la conduite d'alimentation commune afin d'obtenir le liquide de revêtement protecteur sous forme d'émulsion,
introduire le liquide de revêtement dans un moyen de pulvérisation positionné au niveau d'un poste de revêtement de la chaîne de transport,
appliquer le liquide de revêtement sur l'extérieur des récipients en verre sur la chaîne de transport à l'aide du moyen de pulvérisation,
dans lequel le liquide de revêtement est appliqué sur les récipients en verre sans retirer les récipients en verre de la chaîne de transport et
dans lequel le liquide de revêtement est une émulsion huile dans l'eau et dans lequel une cire liquide, de préférence une paraffine liquide, avec au moins un agent émulsifiant est utilisée en tant qu'agent de revêtement liquide et de l'eau est utilisée en tant que liquide de dilution.

2. Procédé selon la revendication 1, **caractérisé en ce qu'**un moyen de mélange dépourvu de parties mobiles est utilisé.

3. Procédé selon la revendication 2, **caractérisé en ce qu'**un moyen de mélange s'étendant dans le sens de la longueur comportant des pales de mélange et/ou des déflecteurs de mélange au sein de l'écoulement de liquide est utilisé de telle sorte que le mélange d'agent de revêtement et de liquide de dilution soit continuellement transformé en émulsion stable tandis qu'il s'écoule à travers ce moyen de mélange.

4. Procédé selon l'une quelconque des revendications précédentes, **caractérisé en ce que** le liquide de revêtement est mélangé avec de l'eau provenant d'un robinet ou d'un autre moyen d'approvisionnement en eau.

5. Appareil pour l'application d'un liquide de revêtement protecteur sur des récipients en verre (1) consignés, en particulier des bouteilles de bière en verre, qui est intégré dans le processus de remplissage des récipients en verre, l'appareil comprenant :
une chaîne de transport (2) pour le transport des récipients en verre (1),
un moyen d'approvisionnement en liquide de revêtement (3), comprenant deux sources (3', 3"), à savoir d'une part une source (3') qui est un moyen d'approvisionnement en agent de revêtement et d'autre part une source (3") qui est un moyen d'approvisionnement en liquide de dilution,
un poste de revêtement (4) au niveau de la chaîne de transport (2),
un moyen de pulvérisation (5) positionné au niveau du poste de revêtement (4),
un moyen d'alimentation en liquide (6) introduisant le liquide de revêtement protecteur dans le moyen de pulvérisation (5),
un moyen de commande (7) commandant le fonctionnement de l'appareil,
dans lequel le moyen de pulvérisation (5) peut être mis en oeuvre pour appliquer le liquide de revêtement protecteur sur l'extérieur des récipients en verre (1) sur la chaîne de transport (2) sans retirer les récipients en verre (1) de la chaîne de transport (2) et de préférence de manière automatique,
dans lequel le moyen d'alimentation en liquide (6) comprend au moins une conduite d'alimentation (12) servant à l'alimentation en liquide de revêtement,
au moins un moyen formant valve (13) à l'intérieur de la conduite d'alimentation (12) et un moyen de mélange (24) positionné au niveau de l'entrée de la conduite d'alimentation commune (12) ou à l'intérieur de celle-ci,
dans lequel les deux sources (3', 3") sont raccordées à une conduite d'alimentation commune (12) pour le liquide de revêtement.

6. Appareil selon la revendication 5, **caractérisé en ce que** la source (3') pour l'agent de revêtement comprend un réservoir (16) pour l'agent de revêtement, un moyen de pompage (14) et, de préférence, une valve de dosage (18) du côté aval du moyen de pompage (14), dans lequel le côté aval du moyen de pompage (14), de préférence le côté aval de la valve de dosage (18), est raccordé à la conduite d'alimentation commune (12).

7. Appareil selon la revendication 5 ou 6, **caractérisé en ce que** la source (3") pour le liquide de dilution comprend un robinet d'eau (19) et une valve de régulation d'écoulement (20), le côté aval de la valve de régulation d'écoulement (20) étant raccordé à la conduite d'alimentation commune (12).

8. Appareil selon l'une quelconque des revendications 5 à 7, **caractérisé en ce que** le moyen de mélange (24) est un moyen de mélange dépourvu de parties mobiles, c'est-à-dire un moyen de mélange statique.

9. Appareil selon la revendication 8, **caractérisé en ce que** le moyen de mélange (24) est un moyen de mélange s'étendant dans le sens de la longueur comportant des pales de mélange (25) et/ou des déflecteurs de mélange au sein de l'écoulement de liquide, dans lequel le mélange d'agent de revêtement et de liquide de dilution est continuellement transformé en émulsion stable tandis qu'il s'écoule à travers le moyen de mélange (24) dans le sens de la longueur.

10. Appareil selon la revendication 9, **caractérisé en ce que** le moyen de mélange (24) comprend un certain nombre de chambres de mélange comportant un nombre différent et/ou un agencement différent de pales de mélange (25) et/ou de déflecteurs de mélange disposé(e)s l'un(e) après l'autre dans le sens de la longueur du moyen de mélange.
